# EUROPEAN PATENT APPLICATION

(11) **EP 4 843 640 A1**
(43) Date of publication of application: **25.11.2026**
(21) Application number: 26178509.1
(22) Date of filing: 13.05.2026
(51) Int. Cl.: A63F 13/47, A63F 13/48, A63F 13/69, A63F 13/493, A63F 13/822

(54) **GAME SYSTEM, CONTROL METHOD, AND CONTROL PROGRAM THEREFOR**

(30) Priority: 21.05.2025 JP 2025085104
(71) Applicant: SNK Corporation, Osaka-shi, Osaka 5320003 (JP)
(72) Inventor: KUROKI, Nobuyuki, OSAKA-SHI, OSAKA (JP)
(74) Representative: Algemeen Octrooi- en Merkenbureau B.V.

(57) **Abstract**

A game system (100) provides a fighting game in which a player character operated by a user battles against an enemy character, the fighting game including a battle part in which the player character and the enemy character battle against each other, and a dialogue part in which the player character and the enemy character dialogue with each other before the battle. The game system (100) includes: a receiving unit (151) that receives a skip input for skipping the dialogue part during the dialogue part; and a game control unit (152) that controls, in a case where the skip input is received, the fighting game to transition from a screen of the dialogue part to a screen of the battle part without interruption.

## Description

### BACKGROUND OF THE INVENTION

### 1. Field of the Invention

The present invention relates to a game terminal that provides a battle game in which a user operates a character to battle against an enemy character, and a control method and a control program therefor.

### 2. Description of Related Art

In recent years, with the rise of e-sports, fighting games have also been gaining popularity. In such fighting games, a technique for switching between modes has also been developed. Japanese Unexamined Patent Application Publication No. 2003-62345 discloses a battle-type game capable of switching between a first mode in which at least three or more characters are displayed and fight against each other and a second mode in which two characters are displayed and fight in a one-on-one battle. In addition, Japanese Unexamined Patent Application Publication No. 2008-229115 discloses a technique for maintaining high interest in viewing an opening demo video of a battle game.

### SUMMARY OF THE INVENTION

In fighting games, a dialogue part in which a conversation of lines between the characters can be enjoyed is often displayed before the characters battle against each other. The dialogue part is provided to show the relationship between the characters or to enhance the sense of presence of the battle, but is basically sufficient to be viewed once by the user, and is often skipped. However, in a case where the dialogue part is skipped, the conversation between the characters is abruptly interrupted and the game transitions to the battle, which causes a problem that the sense of presence and the story of the game cannot be sufficiently experienced.

Therefore, an object of the present invention is to provide a game system that can build up the excitement of the user for the battle without impairing the excitement even in a case where the dialogue part is skipped.

In order to solve the above-described problem, according to an aspect of the present invention, there is provided a game system that provides a fighting game in which a player character operated by a user battles against an enemy character, the fighting game including a battle part in which the player character and the enemy character battle against each other, and a dialogue part in which the player character and the enemy character dialogue with each other before the battle, the game system including: a receiving unit that receives a skip input for skipping the dialogue part during the dialogue part; and a game control unit that controls, in a case where the skip input is received, the fighting game to transition from a screen of the dialogue part to a screen of the battle part without interruption.

In order to solve the above-described problem, according to an aspect of the present invention, there is provided a control method executed by a game system that provides a fighting game in which a player character operated by a user battles against an enemy character, the fighting game including a battle part in which the player character and the enemy character battle against each other, and a dialogue part in which the player character and the enemy character dialogue with each other before the battle, the control method executed by a computer, including: a receiving step of receiving a skip input for skipping the dialogue part during the dialogue part; and a game control step of controlling, in a case where the skip input is received, the fighting game to transition from a screen of the dialogue part to a screen of the battle part without interruption.

In order to solve the above-described problem, according to an aspect of the present invention, there is provided a control program executed by a computer of a game system that provides a fighting game in which a player character operated by a user battles against an enemy character, the fighting game including a battle part in which the player character and the enemy character battle against each other, and a dialogue part in which the player character and the enemy character dialogue with each other before the battle, the control program causing the computer to implement: a receiving function of receiving a skip input for skipping the dialogue part during the dialogue part; and a game control function of controlling, in a case where the skip input is received, the fighting game to transition from a screen of the dialogue part to a screen of the battle part without interruption.

In addition, in the game system, the game control unit may transition to the screen of the battle part without interposing a loading screen for loading the battle part during the transition from the screen of the dialogue part to the screen of the battle part.

In addition, in the game system, the game control unit may provide, as the screen of the dialogue part, a screen of the dialogue part corresponding to a combination of the player character and the enemy character.

In addition, in the game system, the skip input may be an input in which one of the player character and the enemy character attacks the other, and the game control unit may insert a conversation between the one that attacks and the other that is attacked before a start of the battle part.

In addition, in the game system, the attack may not reduce health points of the other.

According to the game system according to the present invention, it is possible to provide a game in which a transition from the dialogue part to the battle part can be naturally made.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a system diagram showing a system configuration example,
FIG. 2 is a block diagram showing a configuration example of a game terminal,
FIG. 3 is a flowchart showing an operation example of the game terminal,
FIGS. 4A to 4C are diagrams showing screen examples of a dialogue part,
FIG. 5A is a diagram showing a screen example of the dialogue part,
FIG. 5B is a diagram showing a screen example at a start of a battle, and
FIGS. 6A and 6B are diagrams showing screen examples of the dialogue part in a case of skipping. FIG. 6C is a diagram showing a screen example before the start of the battle in a case of skipping.

### DETAILED DESCRIPTION OF EMBODIMENTS

Hereinafter, a game system according to the present invention will be described with reference to the drawings.

### Embodiment

### Outline

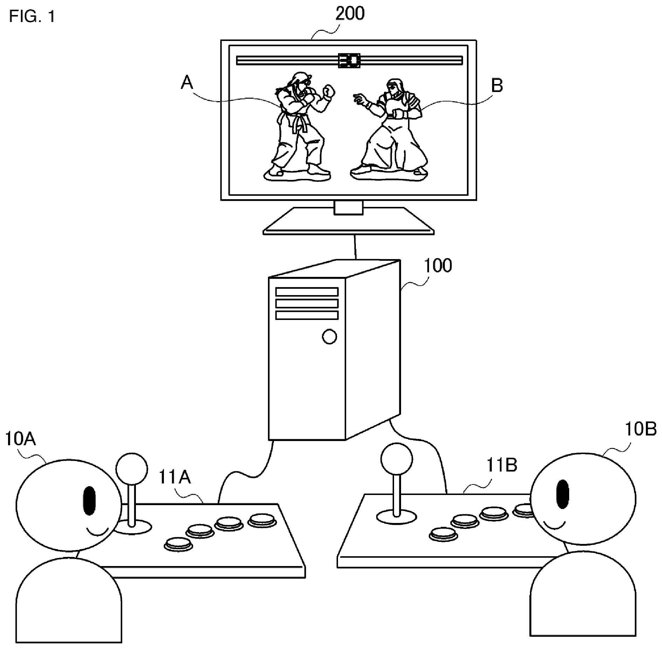

FIG. 1 is a diagram showing a state in which a user 10A and a user 10B are battling against each other in a fighting game. As shown in FIG. 1, the user 10A operates a controller 11A connected to a game terminal 100 to operate a player character A of the user 10A displayed on a monitor 200, and battles against a character B as an enemy character. Similarly, the user 10B operates a controller 11B connected to the game terminal 100 to operate a player character B of the user 10B displayed on the monitor 200, and battles against a character A as an enemy character. Here, an example of a battle between characters operated by the users is shown, but the opponent with which the user battles may be an enemy character operated by the game terminal 100.

In such a fighting game, a screen of a conversation between the characters to battle (hereinafter, referred to as a dialogue part) is displayed before the battle starts. Since this screen may be considered to be sufficient to be viewed once by the user, the screen is configured to be skipped as a game specification and to transition to a battle screen. In the related art, with the skip of the dialogue part, the dialogue part is suddenly interrupted, and in some cases, transitions to the battle screen via a loading screen, for example, before the battle. Therefore, there is a concern that the excitement of the game due to the conversation between the characters may be impaired, which may result in a decrease in the interest of the fighting game, or the excitement, for example, of the user for the battle may be decreased. Therefore, in the present embodiment, a game system will be described in which, in a case where the dialogue part is skipped, the dialogue part can be skipped and the game can transition to the battle without the user feeling a sense of incongruity.

In FIG. 1, an example is shown in which the user 10A and the user 10B battle against each other using a controller connected to one game terminal 100 at the same place, but the battle by the game system may be an online battle. In this case, the game terminal 100 of the user 10A is connected to a communication network, and the game terminal 100 of the user 10B is also connected to the communication network, and information on operations performed on each of the game terminals 100 is exchanged with each other to be processed on each of the game terminals 100, thereby enabling the battle. At this time, a relay server that relays each piece of operation information may be disposed. In the present embodiment, the game terminal 100 in the aspect shown in FIG. 1 will be described as a game system, but even in a case of an online battle, the battle between the users of the fighting game can be embodied, and the skipping of the dialogue part according to the present invention can similarly be implemented.

### Configuration

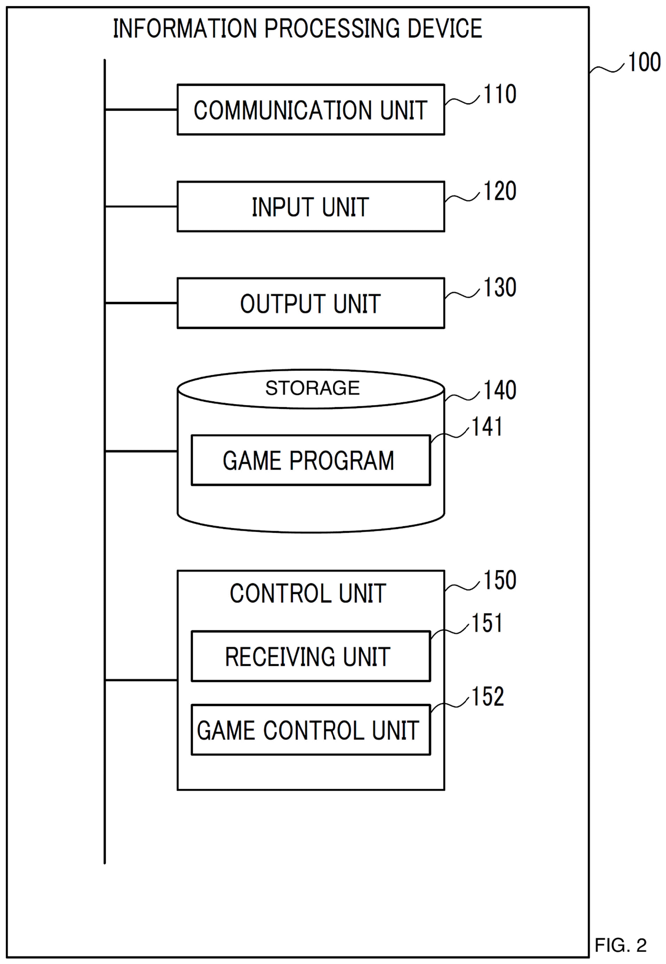

FIG. 2 is a block diagram showing a configuration example of the game terminal 100. The game terminal 100 is a computer system (information processing device) that can provide a computer game to the user. The game terminal 100 may be a dedicated game machine, may be implemented by a personal computer (PC), or may be implemented by a smartphone, and a tablet terminal, for example. As shown in FIG. 2, the game terminal 100 includes an input unit 120, an output unit 130, a storage 140, and a control unit 150, and may include a communication unit 110.

The communication unit 110 is a communication interface that communicates with another information processing device outside the game terminal 100 and exchanges information. The communication unit 110 may communicate with another information processing device, for example, another game terminal 100, to receive information necessary for executing the game and transmit the information to the control unit 150. In addition, the communication unit 110 may transmit information necessary for another information processing device (for example, another game terminal 100) to execute the game to the other information processing device (the other game terminal 100) in accordance with an instruction from the control unit 150. In a case where the game terminal 100 provides an online battle, the communication unit 110 may, for example, receive an input content for the game transmitted from another game terminal and transmit the input content to the control unit 150, and the communication unit 110 may, for example, transmit information on operations for a character performed by the user on the game terminal in accordance with an instruction from the control unit 150.

The input unit 120 receives an input related to the game from the user of the game terminal 100 and transmits the received input content to the control unit 150. The input unit 120 may be implemented by, for example, a mouse, a touch pad, a keyboard, a game pad, a joystick, an arcade controller, but is not limited thereto. For example, in a case where the input unit 120 receives a skip input from the user at a timing at which the game terminal 100 displays the dialogue part before the battle on the monitor 200, the input unit 120 transmits the input content to the control unit 150. The skip input may be an attack input on the enemy character by the character operated by the user. The skip input according to the present embodiment is an input for interrupting the dialogue part and transitioning to the battle part, and the interruption may mean shortening a playback time of an image (video) as the dialogue part.

The output unit 130 has a function of outputting information designated by the control unit 150. The output unit 130 may be implemented by, for example, a monitor provided in the game terminal 100 or a monitor connected to the game terminal 100. In addition, the output unit 130 may be implemented by, for example, a speaker provided in the information processing device, a speaker connected to the game terminal 100, or an earphone. The output unit 130 may output an image showing a game screen or output a sound related to the game (for example, a background music (BGM) of the game or a voice of the character) in accordance with an instruction from the control unit 150. The output unit 130 outputs a screen of the dialogue part instructed by the control unit 150 to the monitor 200, and in a case where there is a skip input from the user during the dialogue part, the output unit 130 switches the display to a screen of the battle part to provide a battle screen.

The storage 140 has a function of storing a program and various types of data required for the operation of the game terminal 100. The storage 140 can be implemented by, for example, a storage medium such as a hard disk drive (HDD), a solid state drive (SSD), or a flash memory. The storage 140 may include a random access memory (RAM) and a read only memory (ROM). The storage 140 stores a game program 141. The game program 141 is a computer program that provides the fighting game to the user, and may be a program in which information for operating each character, an operation on the game, and a method of determining whether or not to execute the operation, for example, are described. In addition, the game program 141 may be a program that provides the fighting game including the battle part in which the characters actually battle against each other and the dialogue part in which the characters dialogue with each other before the battle part, and may be a program that seamlessly transitions to the battle part in a case where there is a skip input from the user during the dialogue part. The seamless transition means, for example, that the transition is made from the dialogue part to the battle part in the story development such that the user does not feel that the dialogue part is skipped. In addition, the seamless transition may mean, for example, that the transition is made without displaying a loading screen for preparing the battle part in the middle.

The control unit 150 is a processor that controls each unit of the game terminal 100. The control unit 150 executes various programs using various types of data stored in the storage 140 to implement functions to be implemented by the game terminal 100. The control unit 150 can provide the game implemented by the game program 141, particularly the fighting game, to the user by executing the game program 141.

The control unit 150 functions as a receiving unit 151 and a game control unit 152. The receiving unit 151 and the game control unit 152 may be functions implemented by the control unit 150 executing the game program 141.

The receiving unit 151 receives a skip input from the user during the dialogue part in the battle game. The skip input is an input for interrupting the dialogue part and transitioning to the battle part. As described above, the skip input may be an attack input on the enemy character by the character operated by the user, but the attack caused by the attack input may not be an attack that can reduce the health of the enemy character in the battle part. In addition, the game may be configured such that the attack by the skip input can reduce the health of the enemy character by a predetermined value, and in this case, the game may be configured such that a value of a gauge required for the enemy character to use a special move increases by a predetermined value, for example. The enemy character may be a character controlled by the game terminal 100 or may be a character operated by another user.

The game control unit 152 executes the game program 141 to provide the user with the fighting game in which the character operated by the user battles against the enemy character. The game control unit 152 provides the user with a screen of the dialogue part in which the player character operated by the user and the enemy character dialogue with each other, and controls the fighting game to transition from the screen of the dialogue part to the screen of the battle part without interruption in a case where the receiving unit 151 receives the skip input during the dialogue part. In a case where the game control unit 152 is informed by the receiving unit 151 that a skip input has been received during the dialogue part, the game control unit 152 outputs a predetermined skip image, and causes the output unit 130 to output an initial screen of the battle part seamlessly and smoothly to transition to the battle part. After the transition to the battle part, a game in which the battle is performed in the same manner as in the normal fighting game is provided. The dialogue part and the battle part are names given for convenience to facilitate the description of a scene in the game.

The above is a configuration example of the game terminal 100.

### Operation

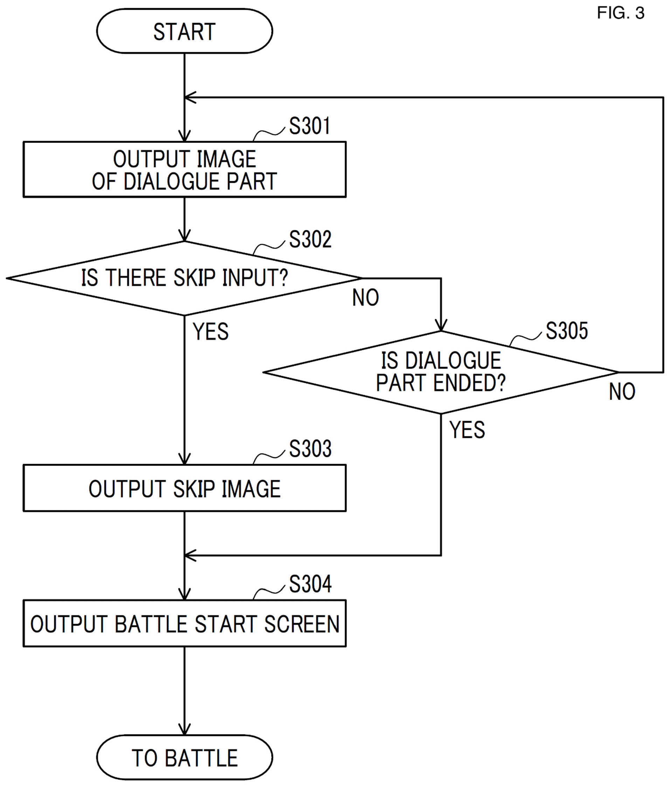

Hereinafter, the operation of the game terminal 100, particularly, the processing of the transition from the dialogue part to the battle part will be described. FIG. 3 is a flowchart showing an operation example of the game terminal 100.

The flowchart shown in FIG. 3 is a flowchart showing the processing of the battle between one character and another character in the fighting game provided by the game terminal 100, and is a flowchart showing the processing until the actual start of the battle.

As shown in FIG. 3, the control unit 150 executes the game program 141 to cause the output unit 130 to output an image or a video of the dialogue part (step S301). In this case, related sounds (BGM, and lines of the character, for example) may also be output.

The receiving unit 151 determines whether a skip input for skipping the dialogue part has been made by the user via the input unit 120 while the dialogue part is being provided (step S302). That is, it is determined whether or not a predetermined input from the user has been transmitted from the input unit 120.

In a case where the receiving unit 151 receives the skip input from the user via the input unit 120 (YES in step S302), the game control unit 152 starts the transition from the dialogue part to the battle part, and causes the output unit 130 to output a skip image (step S303). Here, in a case where the battle is a battle between the player characters operated by the users, it is confirmed from which user the skip input has been received, and the skip image corresponding to the player character of the user who has performed the skip input is output.

Then, the game control unit 152 causes the output unit 130 to output a battle start screen as the start of the battle part (step S304), and starts the battle game.

In contrast, in a state in which the receiving unit 151 does not receive the skip input (NO in step S302), the game control unit 152 determines whether or not the dialogue part has ended (step S305). The end of the dialogue part may be determined based on whether or not a video (which may be an animation or may be a picture-story show) set as the dialogue part has been played to the end.

In a case where the dialogue part has ended (YES in step S305), the process proceeds to the process of step S304, and the game control unit 152 causes the output unit 130 to output the battle start screen. In contrast, in a case where the dialogue part has not ended (NO in step S305), the control unit 150 returns to the process of step S301 and executes the subsequent processes.

The above is an operation example of the game terminal 100. Other processes (for example, actual processes of the fighting game) are the same as those of a fighting game in the related art, and thus the description thereof will be omitted.

### Specific Example

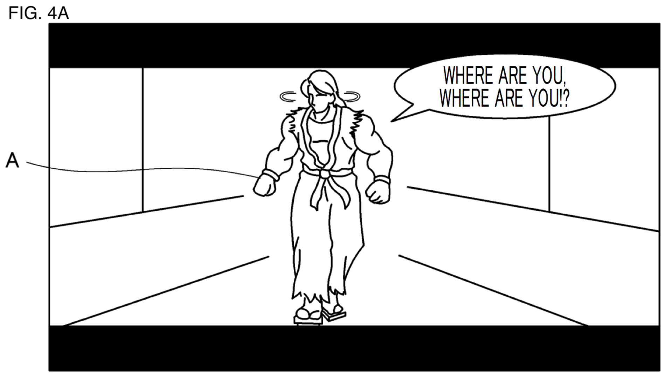

An example of the dialogue part and an example of the transition from the skip of the dialogue part to the battle part will be described with reference to FIGS. 4A to 6C. The examples shown in FIGS. 4A to 6C are merely examples of the dialogue part and the battle part between the character A and the character B, and the content of the dialogue part may vary depending on the combination of the characters, and the operation at the time of the transition to the battle part may also vary. The only common point is that, when a skip input for interrupting the dialogue part and transitioning to the battle part is received during the dialogue part, the transition is made seamlessly and smoothly while outputting a skip image corresponding to the combination of the characters to battle and corresponding to the player character operated by the user who has performed the skip input.

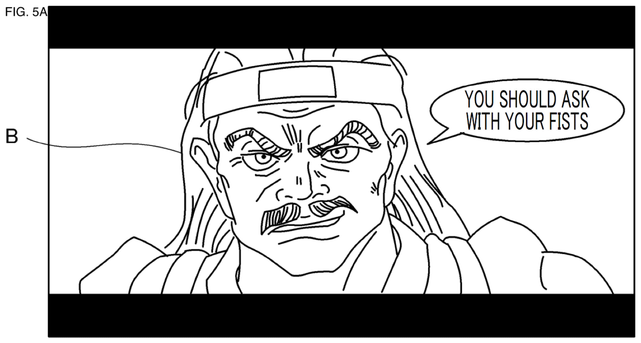

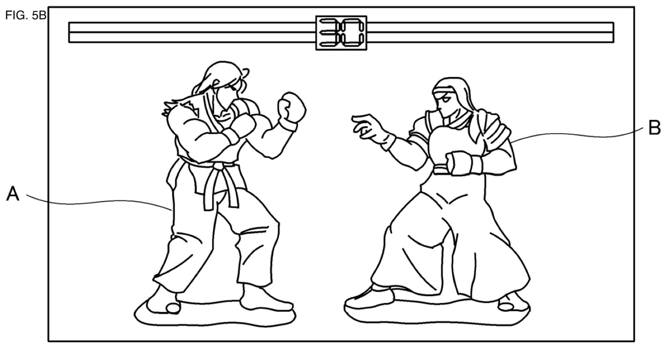

FIGS. 4A to 4C and 5A and 5B are diagrams showing screen examples of the dialogue part, and show screen examples displayed in this order. Here, the lines of the characters are shown in the form of speech bubbles, but the lines may be voice output, may be output in a manner such as subtitles in the image, or may be implemented by both images and text and voice.

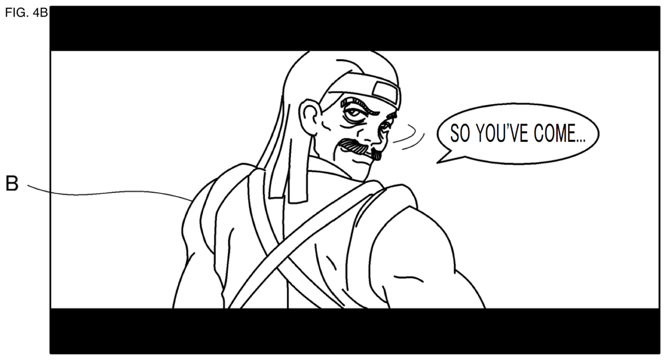

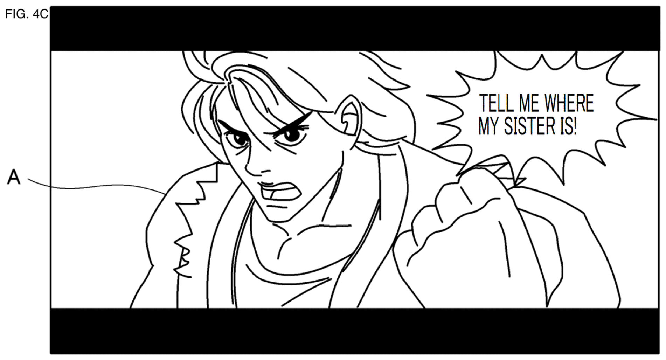

FIG. 4A shows an example of the start of the dialogue part in a case where the character A battles against the character B. FIG. 4A shows a state in which the character A is searching for the character B. In response to this, FIG. 4B shows a state in which the character B has noticed that the character A has visited the character B. FIG. 4C shows a state in which the character A who has found the character B is asking the character B about the whereabouts of the sister. In response to this, FIG. 5A shows a state in which the character B answers the character A, telling character A to force an answer out of character B. The dialogue part is up to here, the dialogue part ends in FIG. 5A, and a screen at the start of the battle part is provided as shown in FIG. 5B.

As shown in FIGS. 4A to 5B, in a case where there is no skip input in the normal dialogue part, a screen showing a story between the characters set in advance flows, and the transition to the battle part is made as shown in FIG. 5B, and the battle is started. The story between the characters is a story determined by the game producer.

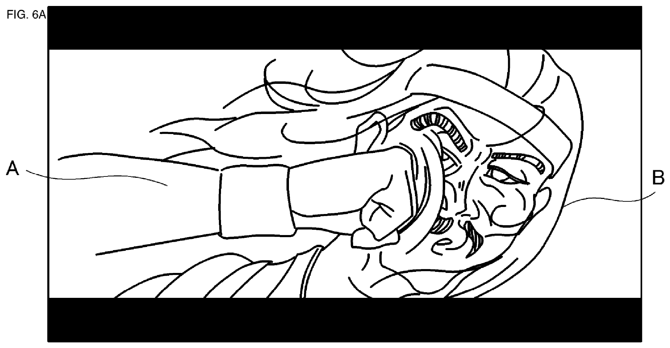

Here, the flow in a case where there is a skip input will be described with reference to FIGS. 6A to 6C. It is assumed that the skip input is received from the user who operates the character A in the flow of the story of FIGS. 4A to 4C and 5A. As an example, it is assumed that the skip input is received at any timing, such as after FIG. 4B and after FIG. 5A.

FIG. 6A shows a screen example in a case where the skip input is entered at the start of the question-and-answer (dialogue) between the character A and the character B or during the question-and-answer (dialogue) as an example. Here, it is assumed that the skip input is entered by the user who operates the character A. In such a case, as an example of the skip input, a screen (skip image or video) in which the character A attacks the character B, which is the opponent, may be displayed. The skip screen is prepared in advance for each character and is stored in the storage 140. The skip screen prepared as the skip input is not limited to the image or the video in which the enemy character is attacked, and may be any image or video as long as the image or the video can give the user a natural impression of connecting from the dialogue part to the battle part.

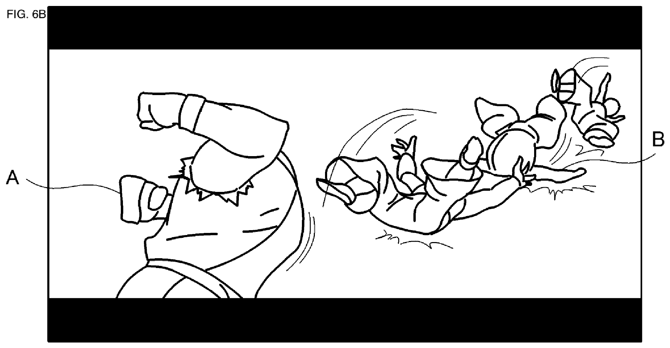

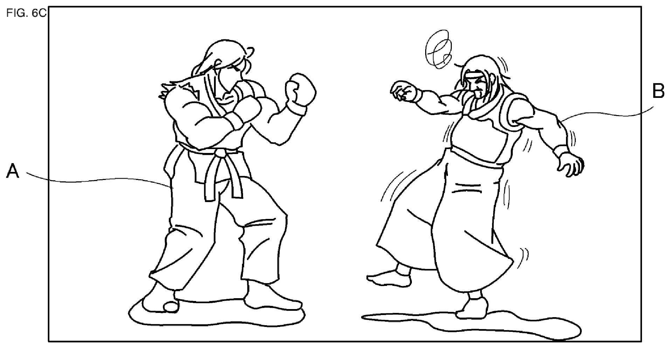

FIG. 6B is a screen example showing a state in which the character B falls down after receiving the attack of the character A. FIG. 6C shows a state in which the character B, which has fallen down, is staggering while standing up, and then the screen transitions to the screen of FIG. 5B, and the battle is started. The display of the image (video) by the skip input is configured to be naturally connected to the battle start screen in the end. Specifically, the final standing positions of the two characters are configured to be connected to the standing positions of the battle start screen. As a result, the skip is performed seamlessly, that is, it is configured such that the user is not aware that the dialogue part is interrupted (the dialogue part is interrupted and skipped), so that the user can naturally transition to the battle without feeling a sense of incongruity with the story, and can perform the battle with an excited mood. In addition, although not shown, when transitioning from FIG. 6C to FIG. 5B, a conversation between the characters in accordance with the flow of the story generated by performing the skip input may be performed. As an example, the character B attacked by the character A due to the skip input may be configured to start the battle after having a conversation such as "What are you doing all of a sudden?" or "Still as restless as ever". A plurality of types of conversations may be prepared, and in this case, the game control unit 152 may be configured to specify which conversation to output according to a predetermined criterion (for example, the criterion may be random, or may be a lottery from among the conversations weighted for each conversation, but the present invention is not limited thereto), and to output the conversation.

### Summary

With the game terminal 100 (game system) according to the present invention, even in a case where the dialogue part in which the user enjoys the conversation between the characters before the battle in the fighting game is skipped, the battle part can be naturally started, and the interest of the user in the game can be improved. That is, in a case where the user wants to skip or shorten the viewing of the opening conversation scene in the battle of the fighting game, it is possible to prevent the sense of presence and the story of the battle from being impaired due to the screen suddenly switching to the battle by the skip input.

### Modification

Although an embodiment according to the present invention has been described in the above-described embodiment, it goes without saying that the idea according to the present invention is not limited thereto. Hereinafter, various modification examples included as the idea according to the present invention will be described.
(1) The skip input shown in the above-described embodiment may be received at a predetermined specific timing during the dialogue part. The predetermined specific timing during the dialogue part may be a specific number of seconds in a time span of the display of the image included in the dialogue part. With such a configuration, the story development when attacking the opponent as the skip input as described above can be transitioned to the fighting game in a natural development when the user views the story development, so that it is possible to provide the user with a fighting game having high interest. In addition, the story development in which the timing of performing such a skip input is determined may be made to be highly valuable due to its rarity by making the timing of reception strict, and a game in which the user wants to battle many times in order to search for such a special development (development in which the skip input is entered) can be provided.
(2) For the skip input shown in the above-described embodiment, a plurality of patterns of images may be prepared according to the button used for the input, and the game terminal 100 may be configured to specify the button input during the dialogue part and to provide the image associated with the specified button. In the fighting game, a battle is often performed using a plurality of buttons, and for example, buttons corresponding to a weak punch attack, a strong punch attack having a higher power than the weak punch attack, a weak kick attack, and a strong kick attack having a higher power than the weak kick attack are prepared. A screen corresponding to the skip input corresponding to each of the buttons (or a part thereof) may be prepared and provided. As an example, a screen in which the punch attack of FIG. 6A is changed to the kick attack may be provided. By preparing the screen corresponding to the plurality of types of skip inputs in this way, it is possible to provide a fighting game in which the user is less likely to feel bored when transitioning from the dialogue part to the battle part.
(3) In the above-described embodiment, the fighting game has been described as an example of the game, but the game according to the present invention is not limited to the fighting game, and may be another game as long as the game is a game in which the character of the user battles against the enemy character in some form and the dialogue part is present before the battle. The battle game may be, for example, a falling block puzzle game or a competitive shooting game.
(4) In the above-described embodiment, each functional unit of the game terminal 100 may be implemented by a logic circuit (hardware) or a dedicated circuit, each formed in an integrated circuit (an integrated circuit (IC) chip, and a large scale integration (LSI)), for example, or may be implemented by software using a central processing unit (CPU) and a memory. In addition, each functional unit may be implemented by one or a plurality of integrated circuits, and the functions of the plurality of functional units may be implemented by one integrated circuit. The LSI may be referred to as a VLSI, a super LSI, and an ultra LSI, for example, depending on the degree of integration. Here, the "circuit" may include a meaning of digital processing by a computer, that is, functional processing by software. In addition, the circuit may be implemented by a reconfigurable circuit (for example, a field programmable gate array (FPGA)).

In a case where each functional unit of the game terminal 100 is implemented by software, the game terminal 100 includes a CPU that executes instructions of a control program, which is software for implementing the functions, a ROM or a storage device (referred to as a "recording medium") in which the control program and various types of data are recorded to be readable by a computer (or a CPU), a RAM that loads the control program, for example. Then, the purpose of the present invention is achieved by the computer (or the CPU) reading and executing the control program from the recording medium. As the recording medium, a "non-transitory tangible medium" such as a tape, a disk, a card, a semiconductor memory, or a programmable logic circuit can be used. In addition, the control program may be supplied to the computer via any transmission medium capable of transmitting the control program (a communication network, and a broadcast wave, for example). The present invention can also be implemented in a form of a data signal embedded in a carrier wave in which the control program is embodied by electronic transmission.

The control program can be implemented using, for example, a script language such as ActionScript or JavaScript (registered trademark), an object-oriented programming language such as C++, Objective-C, or Java (registered trademark), or a markup language such as HTML5, but is not limited thereto. For example, Ruby and Python (registered trademark), for example, may be used.

(5) Various configurations and aspects shown in the above embodiment may be appropriately combined within a range that follows the purpose of naturally (seamlessly) transitioning from the dialogue part to the battle part even in a case where the skip input of the dialogue part is made during the dialogue part of the battle game.

### Description of Reference Numerals

100: information processing device
110: communication unit
120: input unit
130: output unit
140: storage
141: game program
150: control unit
151: receiving unit
152: game control unit
200: monitor

## Claims

1. A game system (100) that provides a fighting game in which a player character operated by a user battles against an enemy character, the fighting game including
a battle part in which the player character and the enemy character battle against each other, and
a dialogue part in which the player character and the enemy character dialogue with each other before the battle, the game system (100) comprising:
a receiving unit (151) that receives a skip input for skipping the dialogue part during the dialogue part; and
a game control unit (152) that controls, in a case where the skip input is received, the fighting game to transition from a screen of the dialogue part to a screen of the battle part without interruption.

2. The game system (100) according to claim 1,
wherein the game control unit (152) transitions to the screen of the battle part without interposing a loading screen for loading the battle part during the transition from the screen of the dialogue part to the screen of the battle part.

3. The game system (100) according to claim 2,
wherein the game control unit (152) provides, as the screen of the dialogue part, a screen of the dialogue part corresponding to a combination of the player character and the enemy character.

4. The game system (100) according to claim 2 or 3,
wherein the skip input is an input in which one of the player character and the enemy character attacks the other, and
the game control unit (152) inserts a conversation between the one that attacks and the other that is attacked before a start of the battle part.

5. The game system (100) according to claim 4,
wherein the attack does not reduce the health points of the other.

6. A control method executed by a game system (100) that provides a fighting game in which a player character operated by a user battles against an enemy character, the fighting game including
a battle part in which the player character and the enemy character battle against each other, and
a dialogue part in which the player character and the enemy character dialogue with each other before the battle, the control method executed by a computer, comprising:
a receiving step of receiving a skip input for skipping the dialogue part during the dialogue part; and
a game control step of controlling, in a case where the skip input is received, the fighting game to transition from a screen of the dialogue part to a screen of the battle part without interruption.

7. A control program executed by a computer of a game system (100) that provides a fighting game in which a player character operated by a user battles against an enemy character, the fighting game including
a battle part in which the player character and the enemy character battle against each other, and
a dialogue part in which the player character and the enemy character dialogue with each other before the battle, the control program causing the computer to implement:
a receiving function of receiving a skip input for skipping the dialogue part during the dialogue part; and
a game control function of controlling, in a case where the skip input is received, the fighting game to transition from a screen of the dialogue part to a screen of the battle part without interruption.
